# EUROPEAN PATENT SPECIFICATION

(11) **EP 3 800 686 B1**
(45) Date of publication and mention of the grant of the patent: **06.09.2023**
(21) Application number: 19903459.6
(22) Date of filing: 28.12.2019
(51) Int. Cl.: H01M 50/103, H01M 50/176, H01M 50/147, H01M 50/209, H01M 50/264, H01M 50/528, H01M 50/533, H01M 50/536, H01M 50/538, H01M 50/55, H01M 50/555, H01M 50/591, H01M 50/593, H01M 10/42, H01M 10/0525, H01M 10/0587

(54) **SECONDARY BATTERY AND BATTERY MODULE**
SEKUNDÄRBATTERIE UND BATTERIEMODUL
BATTERIE SECONDAIRE ET MODULE BATTERIE

(30) Priority: 29.12.2018 CN 201822274288 U
(43) Date of publication of application: 07.04.2021
(73) Proprietor: Contemporary Amperex Technology Co., Limited, Jiaocheng District Ningde City, Fujian 352100 (CN)
(72) Inventor: JIN, Haizu, Ningde, Fujian 352100 (CN); SHI, Dongyang, Ningde, Fujian 352100 (CN); LI, Zhenhua, Ningde, Fujian 352100 (CN); HU, Fei, Ningde, Fujian 352100 (CN); CHEN, Ning, Ningde, Fujian 352100 (CN)
(74) Representative: Pfenning, Meinig & Partner mbB
(86) International application number: PCT/CN2019/129622
(87) International publication number: WO 2020/135808

(56) References cited:
- EP-A1- 2 966 718
- WO-A1-2013/005922
- CN-A- 1 808 759
- CN-A- 103 531 727
- CN-A- 103 531 727
- CN-A- 106 415 880
- CN-A- 106 415 880
- CN-U- 209 217 029
- CN-U- 209 217 068
- CN-U- 209 217 069

## Description

### TECHNICAL FIELD

The present invention relates to the technical field of batteries, and in particular to a secondary battery and a battery unit.

### BACKGROUND

With the development of technology, secondary batteries have an increasingly wide application range, involving production or living. The secondary batteries are also referred to as power batteries and are rechargeable batteries. The secondary batteries are widely used. Low-capacity secondary batteries can be used in small electric vehicles, and high-capacity secondary batteries can be used in large electric vehicles, such as hybrid vehicles or electric vehicles. When the secondary batteries are used in groups, it is necessary to use a bus bar to connect the secondary batteries in series or in parallel. The bus bar is generally welded to positive and negative electrodes of the secondary battery. The battery unit includes a plurality of secondary batteries and a connector for fixing the plurality of secondary batteries.

The secondary battery mainly includes a housing, an electrode assembly, a current collecting member, and a top cover assembly. The electrode assembly is formed by coiling or stacking a positive electrode piece, a negative electrode piece and an isolation film. In the prior art, the electrode assembly included in the secondary battery expands in some cases to release a large expansion force to the outside.

Since the plurality of secondary batteries included in the battery unit are arranged side by side in a direction, and the expansion force released by the electrode assembly is in the arrangement direction of the secondary batteries, the expansion force released by the electrode assemblies included in the plurality of secondary batteries will be combined and then form a large resultant force, so as to not only lead to deterioration of the electrical performance of the secondary battery, but also require the connector to have high structural strength to restrain and offset the expansion force, which can be achieved by means of increasing the volume of the connector and in turn reduces the energy density and space utilization of the secondary battery.

EP2966718A1 discloses a battery cell including an electrode assembly configured to have a structure in which two or more electrode rolls are stacked in a height direction on the basis of a plane, wherein the electrode rolls have the same size or at least two of the electrode rolls have different sizes, and the electrode rolls having different sizes are stacked to form one or more stepped structures in width and/or height.

WO2013005922A1 discloses a secondary battery comprises: a metallic can comprising a storage portion for storing an electrode assembly together with an electrolyte, and an open portion; a metallic cap positioned on the open portion of the can in order to seal the can; a first sealing portion formed between a flange of the can and a flange of the cap so as to couple the can and the cap to each other; and a second sealing portion formed between the flange of the can and the flange of the cap so as to couple the can and the cap to each other, wherein the first sealing portion and the second sealing portion have different coupling strengths.

### SUMMARY

The scope of the invention is defined by the appended set of claims.

### BRIEF DESCRIPTION OF DRAWINGS

The features, advantages, and technical effects of exemplary embodiments of the present invention will be described below with reference to the drawings.
Fig. 1 is a schematic structural diagram of a battery unit according to an embodiment of the present invention;
Fig. 2 is a schematic exploded structural diagram of a secondary battery according to an embodiment of the present invention;
Fig. 3 is a schematic structural diagram of an electrode unit according to an embodiment of the present invention;
Fig. 4 is a schematic cross-sectional structural diagram of a secondary battery according to an embodiment of the present invention;
Fig. 5 is a schematic cross-sectional structural diagram of a secondary battery according to another embodiment of the present invention;
Fig. 6 is an enlarged view at A in Fig. 5; and
Fig. 7 is a schematic cross-sectional structural diagram of a secondary battery according to yet another embodiment of the present invention.

In the drawings, the drawings are not drawn to actual scale.

### List of reference signs:

10. Secondary battery;
11. Housing; 11a. Accommodating hole; 111. Bottom plate; 112. First side plate; 113. Second side plate;
12. Electrode assembly; 121. Electrode unit; 12a. First electrode piece; 12b. Second electrode piece; 12c. Membrane; 12d. First gap; 12e. Second gap; 12f. Third gap; 12g. Fourth gap; 121a. Wide surface; 121b. Narrow surface; 121c. Coiled end face;
13. Top cover assembly; 131. Top cover plate; 132. Electrode terminal; 133. Insulating plate;
14. First buffer gap;
15. Second buffer gap;
20. Battery unit;
X. Width direction; Y Thickness direction; Z. Axial direction.

### DESCRIPTION OF EMBODIMENTS

Implementations of the present invention will be further described in detail below in conjunction with the drawings and embodiments. The detailed description and drawings of the following embodiments are used to illustrate the principle of the present invention by way of examples, but cannot be used to limit the scope of the present invention, that is, the present invention is not limited to the described embodiments but is defined by the claims.

In the description of the present invention, it should be noted that, unless otherwise stated, "plurality of' means two or more. Orientations or position relationships indicated by terms such as "upper", "lower", "left", "right", "inside" and "outside" are only for convenience of describing the present invention and simplifying the description, rather than indicates or implies that devices or elements referred to must have a specific orientation or be constructed and operated in the specific orientation, and therefore cannot be construed as limiting the present invention. In addition, the terms "first", "second" and "third", etc. are for descriptive purposes only and should not be construed as indicating or implying relative importance.

In the description of the present invention, it should also be noted that the terms "installed", "connected", and "connection" should be understood in a broad sense, unless otherwise explicitly specified and limited, for example, it may be a fixed connection, a detachable connection or an integrated connection; and may be a direct connection or an indirect connection through an intermediate medium. For those of ordinary skill in the art, the specific meaning of the above terms in the present invention could be understood according to specific circumstances.

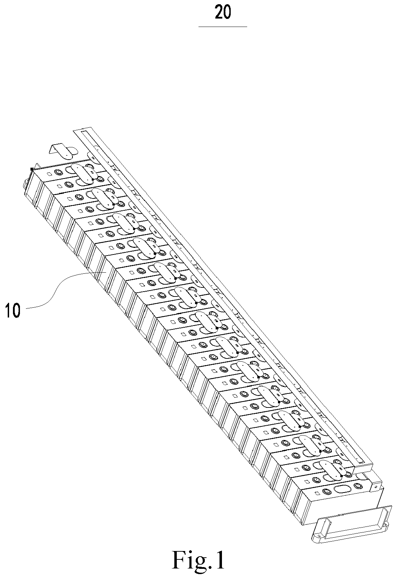

To better understand the present invention, a battery unit 20 and a secondary battery 10 according to the embodiments of the present invention will be described in detail below in conjunction with Figs. 1 to 7.

Referring to Fig. 1, an embodiment of the present invention provides a battery unit 20, including: more than two secondary batteries 10 of this embodiment, and a bus bar for connecting two secondary batteries 10. The more than two secondary batteries 10 are arranged side by side in the same direction. One end of the bus bar is connected and fixed to one secondary battery 10 of the two secondary batteries 10, and the other end thereof is connected and fixed to the other one of the secondary batteries 10. The more than two secondary batteries 10 of this embodiment can be arranged side by side in their own thickness direction Y to form the battery unit 20.

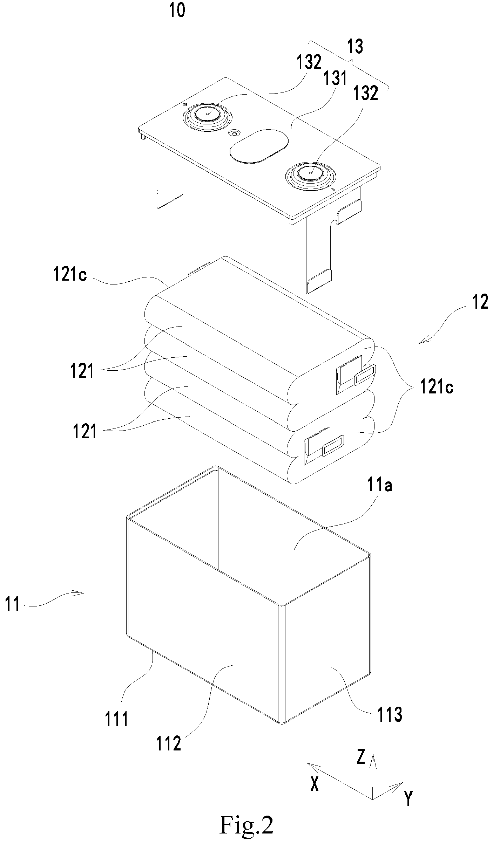

Referring to Fig. 2, the secondary battery 10 according to an embodiment of the present invention includes a housing 11, an electrode assembly 12 arranged in the housing 11, and a top cover assembly 13 connected to the housing 11 in a sealed manner.

The housing 11 of this embodiment is in a quadrangular prism shape. The housing 11 has an internal space for accommodating the electrode assembly 12 and an electrolytic solution. The housing 11 may be made of a material such as aluminum, aluminum alloy or plastic. The housing 11 includes a bottom plate 111, first side plates 112 connected to the bottom plate 111, and second side plates 113 connected to the bottom plate 111. The bottom plate 111, two first side plates 112, and two second side plates 113 form an accommodating hole 11a and an opening in communication with the accommodating hole 11a. The opening is provided corresponding to the bottom plate 111 in an axial direction Z of the accommodating hole 11a, wherein corresponding provision does not mean that two surfaces are completely opposite each other in a strict sense, but also includes that two surfaces are partially opposite each other and two surfaces are tilted slightly opposite each other. The axial direction Z of the accommodating hole 11a is the extension direction of the accommodating hole 11a. The electrode assembly 12 is arranged in the accommodating hole 11a. The top cover assembly 13 is connected to the housing 11 in a sealed manner to cover and close the opening, sealing the electrode assembly 12 in the housing 11. In one example, the top cover assembly 13 includes a top cover plate 131 and an electrode terminal 132. The top cover plate 131 and the electrode terminal 132 are both located on one side of electrode assembly 12 in the axial direction Z. The top cover assembly 13 is connected to the housing 11 in a sealed manner by the top cover plate 131. The electrode terminal 132 is arranged on the top cover plate 131 and is electrically connected to the electrode assembly 12.

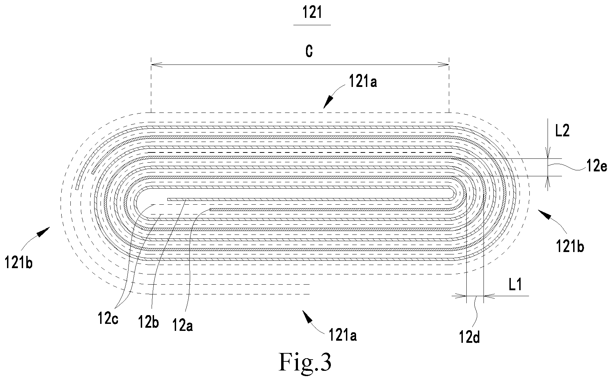

Referring to Fig. 3, the electrode unit 121 is formed by coiling a first electrode piece 12a, a second electrode piece 12b, and a membrane 12c. The electrode unit 121 is a flat structural body as a whole. The electrode unit 121 has wide surfaces 121a and narrow surfaces 121b. The electrode assembly 12 of this embodiment includes more than two electrode units 121. The more than two electrode units 121 are laminated in the axial direction Z of the accommodating hole 11a, and the wide surface 121a of each of the electrode units 121 is arranged corresponding to the bottom plate 111, and the narrow surface 121b of each of the electrode unit 121 faces the first side plate 112. The axial direction Z of the accommodating hole 11a intersects the thickness direction Y of the secondary battery 10. The electrode unit 121 includes a main body part and an electrode tab. The membrane 12c is an insulator located between the first electrode piece 12a and the second electrode piece 12b. The electrode unit 121 of this embodiment includes a layer of membrane 12c, a layer of first electrode piece 12a, a layer of membrane 12c, and a layer of second electrode piece 12b. In this embodiment, as an example, the first electrode piece 12a is a positive electrode piece, and the second electrode piece 12b is a negative electrode piece for illustration. Similarly, in other embodiments, the first electrode piece 12a can also be a negative electrode piece, and the second electrode piece 12b is a positive electrode piece. In addition, a positive electrode active material is coated on a coated region of the positive electrode piece, and a negative electrode active material is coated on a coated region of the negative electrode piece. An uncoated region extending out of the main body part then serves as the electrode tab. The electrode unit 121 includes two electrode tabs, i.e., a positive electrode tab and a negative electrode tab. The positive electrode tab extends out of the coated region of the positive electrode piece; and the negative electrode tab extends out of the coated region of the negative electrode piece. During an electrolytic solution infiltration procedure in a manufacturing process of the secondary battery 10 or during the later use, an active material layer included in the electrode unit 121 of this embodiment will expand, thereby causing expansion of the electrode unit 121 as a whole. Optionally, the electrode unit of this embodiment has a capacity of 100 Ah to 180 Ah.

The secondary battery 10 according to the embodiment of the present invention includes the housing 11 with the accommodating hole 11a, and the electrode assembly 12 arranged in the accommodating hole 11a. When the electrode unit 121 of this embodiment expands, the electrode unit 121 mainly expands in the axial direction Z of the accommodating hole 11a, such that the electrode unit 121 can release the expansion force in the axial direction Z of the accommodating hole 11a, but release a small expansion force in its own thickness direction Y of secondary battery 10, which in turn will not generate excessive compressive stress on the first side plate 112 of the housing 11. As such, when the more than two secondary batteries 10 of this embodiment are arranged side by side in their own thickness direction Y to form the battery unit 20, since the main expansion force generated when each secondary battery 10 expands intersects the thickness direction Y, the main expansion force generated by each secondary battery 10 does not accumulate in the thickness direction Y and not form a large resultant force. When an external fixing member is used to fix the battery unit 20 including the more than two secondary batteries 10 of this embodiment, the requirements for the rigidity and the strength of the fixing member itself are relatively low, which is beneficial to reduce the volume or weight of the fixing member and to improve the energy density and space utilization of the secondary battery 10 and the battery unit 20 as a whole.

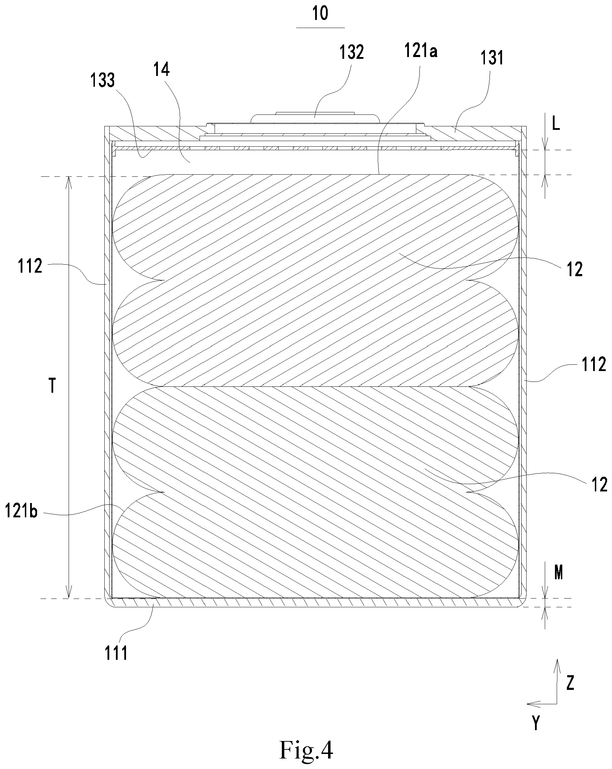

Referring to Fig. 4, in this embodiment, the top cover assembly 13 is spaced apart from the electrode assembly 12 in the axial direction Z of the accommodating hole 11a to form a first buffer gap 14. The first buffer gap 14 is used to buffer the amount of expansion deformation of the electrode assembly 12 in the axial direction Z. When at least one electrode unit 121 of the electrode units 121 included in the electrode assembly 12 undesirably expands, the electrode assembly 12 as a whole will have increased height in the axial direction Z. However, since the electrode assembly 12 is restrained by the bottom plate 111, the electrode assembly 12 mainly expands in a direction toward the top cover assembly 13, such that the amount of expansion deformation of the electrode assembly 12 will preferentially occupy and squeeze the first buffer gap 14, but will not directly come into contact with the top cover assembly 13 and not apply compressive stress to the top cover assembly 13. As such, when the electrode assembly 12 expands, the electrode assembly 12 will not apply excessive compressive stress to the top cover assembly 13 to not cause the top cover assembly 13 to be disconnected from the housing 11, thereby preventing the leakage of electrolytic solution and the failure of the secondary battery 10 due to damage of the overall structure, thereby ensuring the structural integrity and the safety of the secondary battery 10.

In one embodiment, referring to Fig. 4, in the axial direction Z of the accommodating hole 11a, the ratio of the height L of the first buffer gap 14 (the value measured in the axial direction Z of the accommodating hole 1 1a) to the height T of the electrode assembly 12 is 0.05 to 0.3. When the ratio of the height L of the first buffer gap 14 to the height T of the electrode assembly 12 is less than 0.05, the buffering effect of the first buffer gap 14 on the amount of expansion deformation of the electrode assembly 12 will be reduced, and the buffering function cannot be effectively exerted. When the ratio of the height L of the first buffer gap 14 to the height T of the electrode assembly 12 is greater than 0.3, the gap between the electrode assembly 12 and the top cover assembly 13 is too large, resulting in the increased overall size of the secondary battery 10, which in turn causes an adverse effect on the energy density of the secondary battery 10. In one embodiment, the height L of the first buffer gap 14 is 0.5 mm to 12 mm.

In one embodiment, the top cover assembly 13 further includes an insulating plate 133. The insulating plate 133 is arranged at one side of the top cover plate 131 facing the electrode assembly 12 and is connected and fixed to the top cover plate 131. The top cover plate 131 and the electrode assembly 12 can be insulated and isolated by means of the insulating plate 133. The insulating plate 133 is spaced apart from the electrode assembly 12 in the axial direction Z to form the first buffer gap 14. Optionally, a surface of the insulating plate 133 facing the electrode assembly 12 is a smooth surface, such that when the electrode assembly 12 expands to come into contact with the smooth surface of the insulating plate 133, the insulating plate 133 does not apply local squeeze stress to the electrode unit 121 included in the electrode assembly 12, so as to reduce the possibility of cracks in the first electrode piece 12a and/or the second electrode piece 12b included in the electrode unit 121 due to concentration of stress.

Referring to Fig. 3, the coiled electrode unit 121 of this embodiment form a plurality layers of the first electrode piece 12a in its radial direction. A first gap 12d corresponding to the position of the narrow surface 121b is provided between two adjacent coils of the first electrode piece 12a. A second gap 12e corresponding to the position of the wide surface 121a is provided between two adjacent coils of the first electrode piece 12a. Here, the size L1 of the first gap 12d and the size L2 of the second gap 12e both refer to the sum of a gap between the membrane 12c and the electrode piece 12a and a gap between the membrane 12c and the second electrode piece 12b. When the active material coated on the first electrode piece 12a or the second electrode piece 12b of the electrode unit 121 expands, due to the expansion force, each layer of the first electrode piece 12a will be displaced in the radial direction of the electrode unit 121. The first gap 12d and the second gap 12e can both absorb the amount of displacement of each layer of the first electrode piece 12a, and thus the amount of expansion displacement of the narrow surface 121b and the wide surface 121a of the electrode unit 121 is effectively reduced, thereby effectively reducing the expansion force released by the electrode unit 121 as a whole in various directions. In one embodiment, the size L1 of the first gap 12d is larger than the size L2 of the second gap 12e, such that the first gap 12d can absorb the amount of expansion displacement of the first electrode piece 12a to a greater extent than the second gap 12e, with the amount of expansion displacement of the narrow surface 121b of the electrode unit 121 being smaller than the amount of expansion displacement of the wide surface 121a of the electrode unit 121. In one embodiment, two coils of the first electrode piece 12a forming the first gap 12d is the same as those forming the second gap 12e. In one embodiment, the size L1 of the first gap 12d is 5 um to 50 um. When the size L1 of the first gap 12d is less than 5 um and the electrode unit 121 expands, the narrow surface 121b of the electrode unit 121 will come into contact with the housing 11 earlier, such that the electrode unit 121 will receive a relatively large reaction force when continuing to expand after the narrow surface 121b comes into contact with the housing 11, and the electrolytic solution in the first gap 12d will be squeezed out, such that lithium ions cannot transferred normally , which affects the service life of the secondary battery 10. Moreover, since the narrow surface 121b of the electrode unit 121 is restrained by the housing 11, the expansion force will be transferred to the wide surface 121a, resulting in excessive accumulation of the expansion force in the thickness direction Y When the size L1 of the first gap 12d is greater than 50 um, the first gap 12d between the two adjacent layers of the first electrode piece 12a will be too large such that the transmission of the lithium ions takes too much time, which results in the poor dynamic performance of the narrow surface 121b and is prone to lithium precipitation.

When the electrode unit 121 of the embodiment of the present invention expands without being restrained by the housing 11, the wide surface 121a and the narrow surface 121b included in the electrode unit 121 have different amounts of expansion deformation, and the wide surface 121a has a larger amount of expansion deformation than the narrow surface 121b. However, when the electrode unit 121 is installed into the housing 11, the bottom plate 111 of the housing 11 of this embodiment is arranged corresponding to the wide surface 121a of the electrode unit 121, and the first side plate 112 is arranged corresponding to the narrow surface 121b, such that the amount of expansion deformation of the electrode unit 121 is limited, and the difference in the expansion degree of the electrode unit 121 in the areas of the wide surface 121a and the narrow surface 121b is reduced, which is in turn beneficial to ensure the uniformity of infiltration of the areas of the electrode unit 121, effectively improve the infiltration effect, and improve the electrical performance of the secondary battery 10.

The material of the housing 11 of this embodiment is preferably a metal material. The housing 11 includes two first side plates 112 oppositely arranged in the thickness direction Y of the secondary battery 10 and two second side plates 113 oppositely arranged in the width direction X of the secondary battery 10. The first side plate 112 and the second side plate 113 are alternately arranged so as to be configured in a cylindrical structure with a rectangular cross section. The bottom plate 111 has a rectangular plate-shaped structure and is connected to the first side plates 112 and the second side plates 113 in a sealed manner. The first side plate 112 is arranged corresponding to the narrow surface 121b of the electrode unit 121. The top cover assembly 13 is arranged corresponding to the bottom plate 111 in the axial direction Z of the accommodating hole 11a. The top cover assembly 13 is connected to the first side plates 112 and the second side plates 113 in a sealed manner. In a particular situation, the narrow surface 121b of the electrode unit 121 also expands, but has small amount of expansion deformation. Therefore, the compressive stress applied to the first side plate 112 is small, such that the resultant force of the expansion force accumulated by the secondary batteries 10 in their own thickness direction Y is small. Moreover, the greater the amount of expansion deformation of the electrode unit 121 is, the smaller the size of the first gap 12d and the size L2 of the second gap 12e will be. During the use of the electrode unit 121, the electrolytic solution inside will be consumed, so it is necessary to constantly replenish the electrolytic solution from the outside. When the electrode unit 121 expands, the first side plate 112 can restrain the narrow surface 121b, such that the first gap 12d will become smaller, such that the electrolytic solution in the housing 12 is difficult to be replenished to the inside of the electrode unit 121 through the first gap 12d, affecting the electrical performance of the electrode unit 121. In addition, when the electrode unit 121 expands, the outermost layer of the first electrode piece 12a or the second electrode piece 12b will receive large tensile stress, which is liable to cause fracture of the first electrode piece 12a or the second electrode piece 12b. The first side plate 112 of this embodiment can restrain the narrow surface 121b and prevent an excessive amount of expansion deformation of the narrow surface 121b, thereby effectively reducing the possibility of fracture of the first electrode piece 12a or the second electrode piece 12b.

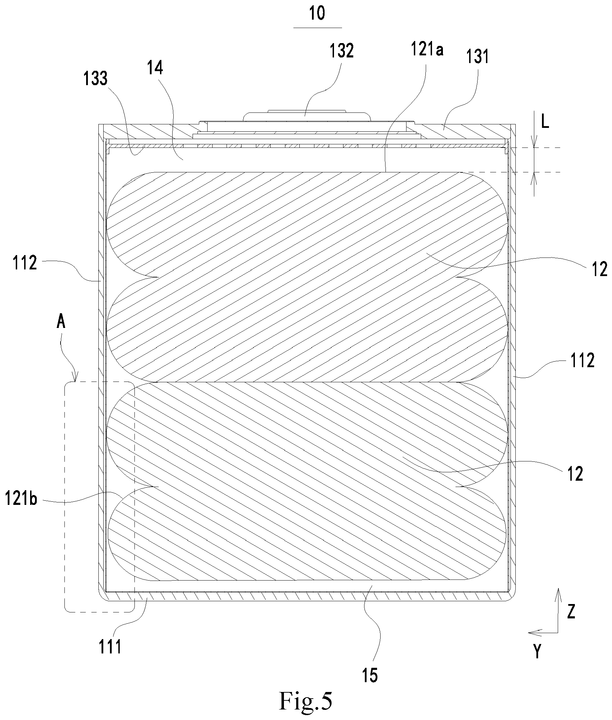

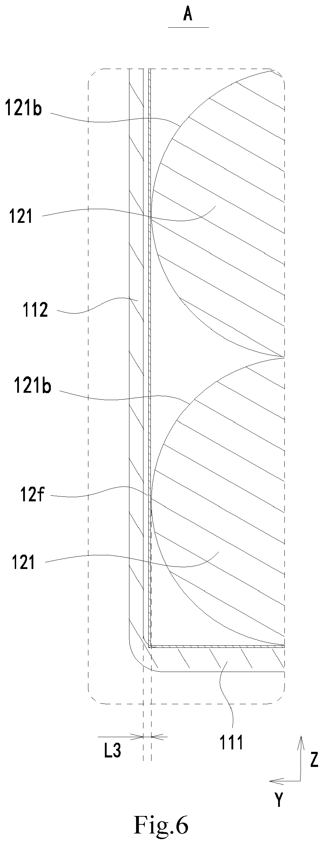

In one embodiment, referring to Figs. 5 and 6, a third gap 12f is provided between the narrow surface 121b and the first side plate 112. The size L3 of the third gap 12f is 0.3 mm to 0.9 mm. When the size L3 of the third gap 12f is less than 0.3 mm, the narrow surface 121b of the electrode unit 121, even when the degree of expansion is small, will completely occupy the third gap 12f and come into contact with the first side plate 112 and apply stress to the first side plate 112, such that when the narrow surface 121b of the electrode unit 121 reaches the maximum amount of expansion deformation, the compressive stress applied to the first side plate 112 by the electrode unit 121 will be too large, which in turn causes the first side plate 112 to deform or causes the entire battery unit 20 to deform in the thickness direction Y of the secondary battery 10. Furthermore, the first side plate 112 applies a relatively large reaction force on the narrow surface 121b of the electrode unit 121, so as to cause the first gap 12d to be completely squeezed and occupied to disappear, such that the electrolytic solution cannot well enter the electrode unit 121 through the first gap 12d, affecting the consistency of the infiltration effect. When the size L3 of the third gap 12f is greater than 0.9 mm, the narrow surface 121b of the electrode unit 121, only when the degree of expansion is large, can completely occupy the third gap 12f and come into contact with the first side plate 112, such that the first side plate 112 cannot form effective restraint on the electrode unit 121, such that when the narrow surface 121b of the electrode unit 121 reaches the maximum amount of expansion deformation, the amount of expansion deformation of the narrow surface 121b of the electrode unit 121 is too large, resulting in the stress concentration in the outermost layer of the first electrode piece 12a or the second electrode piece 12b corresponding to the narrow surface 121b of the electrode unit 121, having a risk of fracture.

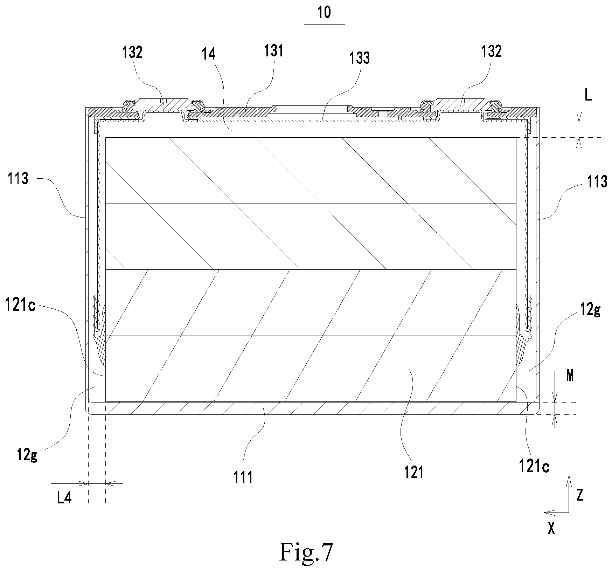

Referring to Fig. 7, the electrode unit 121 of this embodiment includes two opposite coiled end faces 121c in the width direction X of the secondary battery, and a coiling axis perpendicular to the coiled end faces 121c. The second side plate 113 of this embodiment is arranged corresponding to the coiled end face 121c of the electrode unit 121. The thickness of the first side plate 112 is less than that of the second side plate 113. When the electrode unit 121 is in a high-temperature environment, a large amount of high-temperature gas is rapidly generated inside the electrode unit 121. The high-temperature gas inside the electrode unit 121 will be ejected through the coiled end face 121c, resulting in an Instantaneous high-temperature impact on the second side plate 113, which is liable to cause damage or melting of the second side plate 113. Therefore, it is necessary to appropriately increase the thickness of the second side plate 113 to enhance its own strength and rigidity, effectively resist high-temperature impact, and ensure the safety of the secondary battery 10. The first side plate 112 and the second side plate 113 of this embodiment are designed with specific structures according to their different positions and functions, which is beneficial to ensure that the housing 11 as a whole has a rational light weight while meeting the requirements of use, and is beneficial to improve the energy density of the secondary battery 10.

In one embodiment, a fourth gap 12g is provided between the coiled end face 121c and the second side plate 113. The size L4 of the fourth gap 12g is 0.3 mm to 0.9 mm. The fourth gap 12g can be used to buffer the impact force of the second side plate 113 caused by the high-temperature gas released from the inside of the electrode unit 121, so as to reduce the possibility of damage or melting of the second side plate 113, thereby improving the safety in use of the secondary battery 10. When the size L4 of the fourth gap 12g is less than 0.3 mm, the buffering effect of the high-temperature gas released from the inside of the electrode unit 121 is reduced, and the buffering function cannot be effectively exerted. When the size L4 of the fourth gap 12g is greater than 0.9 mm, the gap between the electrode unit 121 and the second side plate 113 is too large, resulting in the increased overall size of the secondary battery 10, which in turn causing an adverse effect on the energy density of the secondary battery 10.

Referring to Fig. 5, in this embodiment, the bottom plate 111 of the housing 11 is spaced apart from the electrode assembly 12 to form a second buffer gap 15. The second buffer gap 15 is used to buffer the amount of expansion deformation of the electrode assembly 12. When at least one electrode unit 121 of the electrode units 121 included in the electrode assembly 12 undesirably expands, the electrode assembly 12 as a whole will have increased height. However, since the electrode assembly 12 is restrained by the top cover assembly 13, the electrode assembly 12 mainly extends in a direction toward the bottom plate 111, such that the amount of expansion deformation of the electrode assembly 12 will preferentially occupy and squeeze the second buffer gap 15, but will not directly apply the compressive stress to the top cover assembly 13. As such, when the electrode assembly 12 expands, the electrode assembly 12 will not apply excessive compressive stress to the top cover assembly 13 to not cause the top cover assembly 13 to be disconnected from the housing 11, thereby preventing the leakage of the electrolytic solution and ensuring the structural integrity and the safety of the secondary battery 10.

In this embodiment, the ratio of the width C of the wide surface 121a (see Fig. 3) of the electrode unit 121 to the thickness M of the bottom plate 111 is greater than or equal to 20 and less than or equal to 69. After the electrode unit 121 expands, the wide surface 121a of the electrode unit 121 will bulge in the axial direction Z of the accommodating hole 11a to have a certain curvature. When C/M > 69, the width C of the wide surface 121a is large, that is, with no change in its own thickness of the electrode unit 121, when the electrode unit 121 expands, the wide surface 121a included in the electrode unit 121 applies a greater force to the bottom plate 111, and since the thickness M of the bottom plate 111 is small, the bottom plate 111 cannot effectively restrain the wide surface 121a, which in turn results in serious deformation of the bottom plate 111 and a large amount of expansion deformation of the electrode unit 121, such that the outermost layer of the first electrode piece 12a or 12b of the electrode unit 121 fractures due to stress concentration; and when C/M < 20, the thickness M of the bottom plate 111 is large, such that the bottom plate 111 itself is less prone to deform. Although the bottom plate 111 can restrain the wide surface 121a, it also apply a large reaction force to the wide surface 121a of the electrode unit 121, and since the width C of the wide surface 121a is small, that is, with no change in its own thickness of the electrode unit 121, the component force of the binding tensile stress of the narrow surface 121b of the electrode unit 121 to the wide surface 121a in the thickness direction Y of the electrode unit 121 is larger, the gaps between the first electrode piece 12a, the membrane 12c, and the second electrode piece 12b included in the electrode unit 121 becomes smaller, such that the electrolytic solution in the gaps between the first electrode piece 12a, the membrane 12c, and the second electrode piece 12b corresponding to the wide surface 121a will be squeezed and discharged, which can cause no electrolytic solution in the gaps in severe cases and is prone to lithium precipitation. When the ratio of the width C of the wide surface 121a of the electrode unit 121 to the thickness M of the bottom plate 111 is in the above range, the amount of expansion deformation of the electrode unit 121 and the infiltration effect of the electrode unit 121 can be balanced, thereby improving the electrical performance of the secondary battery 10. In one embodiment, the width of the wide surface 121a is 40 mm to 60 mm, and the thickness M of the bottom plate 111 is 0.87 mm to 1.8 mm.

The battery unit 20 of the above embodiment of the present invention includes more than two secondary batteries 10. The more than two secondary batteries 10 are arranged side by side in their thickness direction Y In this embodiment, the thickness direction Y is perpendicular to the axial direction Z. The narrow surfaces of the electrode units of two adjacent secondary batteries are arranged correspondingly. The electrode units 121 included in each secondary battery 10 are laminated in the axial direction Z of the accommodating hole 11a of the housing 11. When the electrode unit 121 of this embodiment expands, it expands and deforms mainly in the axial direction Z of the accommodating hole 11a, and the amount of expansion deformation in the thickness direction Y is small. As such, the resultant force of expansion accumulated by the secondary batteries 10 in their own thickness direction Y is small. In the thickness direction Y, the battery unit 20 does not need to use a structural member with high strength to restrain and offset the expansion force, or can restrain and offset the expansion force by using a structural member with low strength, thereby effectively reducing the overall mass of the battery unit 20, such that the battery unit 20 itself has a more compact structure, and the energy density of the battery unit 20 is effectively improved. Moreover, the battery unit 20 itself has a small or no amount of expansion deformation in its own thickness direction Y of the secondary battery 10, which can effectively improve the safety during use. The present invention is not limited to the specific embodiments disclosed herein, but includes all technical solutions falling within the scope of the claims.

## Claims

1. A secondary battery, comprising:
a housing (11) being in a quadrangular prism shape and comprising an accommodating hole (11a) with an opening, the housing (11) comprising a first side plate (112) and a second side plate (113) connected to each other, and the housing (11) comprising a bottom plate (111) being arranged opposite to a top cover assembly (13) in the axial direction (Z);
the top cover assembly (13) connected to the housing (11) in a sealed manner to cover and close the opening;
an electrode assembly (12) arranged in the accommodating hole (11a), the electrode assembly (12) comprising more than two electrode units (121), an electrode unit (121) being of a coiled structure, comprising a first electrode piece (12a), a second electrode piece (12b), and a membrane (12c), and having a wide surface (121a), a narrow surface (121b) and a coiled end face (121c), the more than two electrode units (121) being laminated in an axial direction (Z) of the accommodating hole (11a), and the wide surface (121a) of the electrode unit (121) being arranged facing the top cover assembly (13), the first side plate (112) being arranged facing the narrow surface (121b), the second side plate (113) being arranged facing the coiled end face (121c), and a thickness of the first side plate (112) is less than that of the second side plate (113),
wherein the top cover assembly (13) is spaced apart from the electrode assembly (12) to form a first buffer gap (14), the first buffer gap (14) is configured to buffer an amount of expansion deformation of the electrode assembly (12) in the axial direction (Z),
a first gap (12d) is provided as a separation distance between two adjacent coils of the first electrode piece (12a) and is measured in a direction Y perpendicular to the narrow surface (121b) and to the first plate (112),
a second gap (12e) is provided as a separation distance between the two adjacent coils of the first electrode piece (12a) and is measured in the axial direction (Z) perpendicular to the wide surface (121a) and to the bottom plate (111), and
a size (L1) of the first gap (12d) being greater than a size (L2) of the second gap (12e).

2. The secondary battery according to claim 1, wherein the axial direction (Z), a ratio of a height (L) of the first buffer gap (14) to a height (T) of the electrode assembly (12) is 0.05 to 0.3.

3. The secondary battery according to claim 1 or 2, wherein a height (L) of the first buffer gap (14) is 0.5 mm to 12 mm.

4. The secondary battery according to any one of claims 1-3, wherein the top cover assembly (13) comprises a top cover plate (131) and an insulating plate (133), the insulating plate (133) being arranged on one side of the top cover plate (131) close to the electrode assembly (12), and being spaced apart from the electrode assembly (12) in the axial direction (Z) to form the first buffer gap (14).

5. The secondary battery according to any one of claims 1-4, wherein a third gap (12f) is provided between the narrow surface (121b) and the first side plate (112), and a size (L3) of the third gap (12f) is 0.3 mm to 0.9 mm.

6. The secondary battery according to any one of claims 1-5, wherein a fourth gap (12g) is provided between the coiled end face (121c) and the second side plate (113), and a size (L4) of the fourth gap (12g) is 0.3 mm to 0.9 mm.

7. The secondary battery according to any one of claims 1-6, wherein the bottom plate (111) being spaced apart from the electrode assembly (12) to form a second buffer gap (15), the second buffer gap (15) is configured to buffer an amount of expansion deformation of the electrode assembly (12) in the axial direction (Z).

8. The secondary battery according to any one of claims 1-7, wherein a ratio of a width (C) of the wide surface (121a) to a thickness (M) of the bottom plate (111) is greater than or equal to 20 and less than or equal to 69.

9. A battery unit, comprising more than two secondary batteries according to any one of claims 1 to 8, wherein the more than two secondary batteries are arranged side by side in a direction perpendicular to the axial direction (Z), and the narrow surfaces (121b) of the electrode units (121) of two adjacent secondary batteries are arranged correspondingly.

## Patentansprüche

1. Sekundärbatterie, umfassend:
ein Gehäuse (11), in Form eines viereckigen Prismas und umfassend ein Aufnahmeloch (11a) mit einer Öffnung, das Gehäuse (11) umfassend eine erste Seitenplatte (112) und eine zweite Seitenplatte (113), die miteinander verbunden sind, und das Gehäuse (11) umfassend eine Bodenplatte (111), die in der Axialrichtung (Z) gegenüber einer oberen Abdeckungsanordnung (13) angeordnet ist;
wobei die obere Abdeckungsanordnung (13) abgedichtet mit dem Gehäuse (11) verbunden ist, um die Öffnung abzudecken und zu schließen;
eine im Aufnahmeloch (11a) angeordnete Elektrodenanordnung (12), wobei die Elektrodenanordnung (12) mehr als zwei Elektrodeneinheiten (121) umfasst, wobei eine Elektrodeneinheit (121) eine spulenförmige Struktur aufweist, umfassend ein erstes Elektrodenstück (12a), ein zweites Elektrodenstück (12b) und eine Membran (12c) und eine breite Oberfläche (121a), eine schmale Oberfläche (121b) und einer spulenförmigen Endfläche (121c) aufweisend, wobei die mehr als zwei Elektrodeneinheiten (121) in einer Axialrichtung (Z) des Aufnahmelochs (11a) laminiert sind und die breite Oberfläche (121a) der Elektrodeneinheit (121) der oberen Abdeckungsanordnung (13) zugewandt angeordnet ist, wobei die erste Seitenplatte (112) der schmalen Oberfläche (121b) zugewandt angeordnet ist, die zweite Seitenplatte (113) der spulenförmigen Endfläche (121c) zugewandt angeordnet ist und eine Dicke der ersten Seitenplatte (112) geringer ist als die der zweiten Seitenplatte (113),
wobei die obere Abdeckungsanordnung (13) von der Elektrodenanordnung (12) beabstandet ist, um einen ersten Pufferspalt (14) auszubilden, der erste Pufferspalt (14) dazu konfiguriert ist, einen Betrag der Dehnungsverformung der Elektrodenanordnung (12) in der Axialrichtung (Z) abzufedern,
ein erster Spalt (12d) als ein Trennabstand zwischen zwei benachbarten Windungen des ersten Elektrodenstücks (12a) bereitgestellt ist und in einer Richtung Y senkrecht zu der schmalen Oberfläche (121b) und zu der ersten Platte (112) gemessen wird,
ein zweiter Spalt (12e) als ein Trennabstand zwischen zwei benachbarten Windungen des ersten Elektrodenstücks (12a) bereitgestellt ist und in der Axialrichtung (Z) senkrecht zu der breiten Oberfläche (121a) und zu der Bodenplatte (111) gemessen wird, und
eine Größe (L1) des ersten Spalts (12d) größer ist als eine Größe (L2) des zweiten Spalts (12e).

2. Sekundärbatterie nach Anspruch 1, wobei in der Axialrichtung (Z) ein Verhältnis einer Höhe (L) des ersten Pufferspalts (14) zu einer Höhe (T) der Elektrodenanordnung (12) 0,05 bis 0,3 beträgt.

3. Sekundärbatterie nach Anspruch 1 oder 2, wobei eine Höhe (L) des ersten Pufferspalts (14) 0,5 mm bis 12 mm beträgt.

4. Sekundärbatterie nach einem der Ansprüche 1 bis 3, wobei die obere Abdeckungsanordnung (13) eine obere Abdeckplatte (131) und eine Isolierplatte (133) umfasst, wobei die Isolierplatte (133) auf einer Seite der oberen Abdeckplatte (131) nahe der Elektrodenanordnung (12) angeordnet ist und von der Elektrodenanordnung (12) in Axialrichtung (Z) beabstandet ist, um den erste Pufferspalt (14) auszubilden.

5. Sekundärbatterie nach einem der Ansprüche 1-4, wobei ein dritter Spalt (12f) zwischen der schmalen Oberfläche (121b) und der ersten Seitenplatte (112) bereitgestellt ist und eine Größe (L3) des dritten Spalts (12f) 0,3 mm bis 0,9 mm beträgt.

6. Sekundärbatterie nach einem der Ansprüche 1-5, wobei ein vierter Spalt (12g) zwischen der spulenförmigen Endfläche (121c) und der zweiten Seitenplatte (113) bereitgestellt ist und eine Größe (L4) des vierten Spalts (12g) 0,3 mm bis 0,9 mm beträgt.

7. Sekundärbatterie nach einem der Ansprüche 1 bis 6, wobei die Bodenplatte (111) von der Elektrodenanordnung (12) beabstandet ist, um einen zweiten Pufferspalt (15) auszubilden, der zweite Pufferspalt (15) dazu konfiguriert ist, einen Betrag der Dehnungsverformung der Elektrodenanordnung (12) in der Axialrichtung (Z) abzufedern.

8. Sekundärbatterie nach einem der Ansprüche 1-7, wobei ein Verhältnis einer Breite (C) der breiten Oberfläche (121a) zu einer Dicke (M) der Bodenplatte (111) größer oder gleich 20 ist und kleiner oder gleich 69 ist.

9. Batterieeinheit, umfassend mehr als zwei Sekundärbatterien nach einem der Ansprüche 1 bis 8, wobei die mehr als zwei Sekundärbatterien nebeneinander in einer Richtung senkrecht zu der Axialrichtung (Z) angeordnet sind und die schmalen Oberflächen (121b) der Elektrodeneinheiten (121) zweier benachbarter Sekundärbatterien entsprechend angeordnet sind.

## Revendications

1. Batterie rechargeable, comprenant :
un boîtier (11) en forme de prisme quadrangulaire et comprenant un trou d'accueil (11a) avec une ouverture, le boîtier (11) comprenant une première plaque latérale (112) et une deuxième plaque latérale (113) reliées l'une à l'autre, et le boîtier (11) comprenant une plaque inférieure (111) disposée à l'opposé d'un ensemble couvercle supérieur (13) dans la direction axiale (Z) ;
l'ensemble couvercle supérieur (13) étant relié au boîtier (11) d'une manière scellée pour couvrir et fermer l'ouverture ;
un ensemble électrode (12) disposé dans le trou d'accueil (11a), l'ensemble électrode (12) comprenant plus de deux unités d'électrode (121), une unité d'électrode (121) ayant une structure bobinée, comprenant une première pièce d'électrode (12a), une deuxième pièce d'électrode (12b) et une membrane (12c), et ayant une surface large (121a), une surface étroite (121b) et une face d'extrémité bobinée (121c), les plus de deux unités d'électrode (121) étant stratifiées dans une direction axiale (Z) du trou d'accueil (11a), et la surface large (121a) de l'unité d'électrode (121) étant disposée en face de l'ensemble couvercle supérieur (13), la première plaque latérale (112) étant disposée en face de la surface étroite (121b), la deuxième plaque latérale (113) étant disposée en face de la face d'extrémité bobinée (121c), et une épaisseur de la première plaque latérale (112) étant inférieure à celle de la deuxième plaque latérale (113),
dans laquelle l'ensemble couvercle supérieur (13) est espacé de l'ensemble électrode (12) pour former un premier espace tampon (14), le premier espace tampon (14) est configuré pour absorber une quantité de déformation par dilatation de l'ensemble électrode (12) dans la direction axiale (Z),
un premier espace (12d) est ménagé comme une distance de séparation entre deux boucles adjacentes de la première pièce d'électrode (12a) et est mesuré dans une direction Y perpendiculaire à la surface étroite (121b) et à la première plaque (112),
un deuxième espace (12e) est ménagé comme une distance de séparation entre les deux boucles adjacentes de la première pièce d'électrode (12a) et est mesuré dans la direction axiale (Z) perpendiculairement à la surface large (121a) et à la plaque inférieure (111), et
une taille (L1) du premier espace (12d) est supérieure à une taille (L2) du deuxième espace (12e).

2. Batterie rechargeable selon la revendication 1, dans laquelle dans la direction axiale (Z), un rapport entre une hauteur (L) du premier espace tampon (14) et une hauteur (T) de l'ensemble électrode (12) est de 0,05 à 0,3.

3. Batterie rechargeable selon la revendication 1 ou 2, dans laquelle une hauteur (L) du premier espace tampon (14) est de 0,5 mm à 12 mm.

4. Batterie rechargeable selon l'une quelconque des revendications 1 à 3, dans laquelle l'ensemble couvercle supérieur (13) comprend une plaque de couvercle supérieur (131) et une plaque isolante (133), la plaque isolante (133) étant disposée sur un côté de la plaque de couvercle supérieur (131) près de l'ensemble électrode (12), et étant espacée de l'ensemble électrode (12) dans la direction axiale (Z) pour former le premier espace tampon (14).

5. Batterie rechargeable selon l'une quelconque des revendications 1 à 4, dans laquelle un troisième espace (12f) est ménagé entre la surface étroite (121b) et la première plaque latérale (112), et une taille (L3) du troisième espace (12f) est de 0,3 mm à 0,9 mm.

6. Batterie rechargeable selon l'une quelconque des revendications 1 à 5, dans laquelle un quatrième espace (12g) est ménagé entre la face d'extrémité bobinée (121c) et la deuxième plaque latérale (113), et une taille (L4) du quatrième espace (12g) est de 0,3 mm à 0,9 mm.

7. Batterie rechargeable selon l'une quelconque des revendications 1 à 6, dans laquelle la plaque inférieure (111) est espacée de l'ensemble électrode (12) pour former un deuxième espace tampon (15), le deuxième espace tampon (15) est configuré pour absorber une quantité de déformation par dilatation de l'ensemble électrode (12) dans la direction axiale (Z).

8. Batterie rechargeable selon l'une quelconque des revendications 1 à 7, dans laquelle un rapport entre une largeur (C) de la surface large (121a) et une épaisseur (M) de la plaque inférieure (111) est supérieur ou égal à 20 et inférieur ou égal à 69.

9. Unité de batterie, comprenant plus de deux batteries rechargeables selon l'une quelconque des revendications 1 à 8, dans laquelle les plus de deux batteries rechargeables sont disposées côte à côte dans une direction perpendiculaire à la direction axiale (Z), et les surfaces étroites (121b) des unités d'électrode (121) de deux batteries rechargeables adjacentes sont disposées en correspondance.
